(19) Europäisches Patentamt

European Patent Office

Office européen des brevets

(11) Publication number: **0 520 127 A1**

# EUROPEAN PATENT APPLICATION

(21) Application number: **91870102.0**

(22) Date of filing: **28.06.91**

(51) Int. Cl.5: **H04L 7/033**

(43) Date of publication of application:
**30.12.92 Bulletin 92/53**

(84) Designated Contracting States:
**AT BE CH DE DK ES FR GB GR IT LI LU NL SE**

(71) Applicant: **ALCATEL N.V.**
**Strawinskylaan 341**
**NL-1077 XX Amsterdam(NL)**
(84) **CH LI**

(71) Applicant: **BELL TELEPHONE**
**MANUFACTURING COMPANY Naamloze**
**Vennootschap**
**Francis Wellesplein 1**
**B-2018 Antwerp(BE)**
(84) **BE DE DK ES FR GB GR IT LU NL SE AT**

(72) Inventor: **Van der Plas, Gert**
**Koning Albertstraat 48**
**B-1785 Merchtem(BE)**
Inventor: **Reusens, Peter Paul Frans**
**Warande 121**
**B-9270 Laarne(BE)**
Inventor: **Verbiest, Willem Jules Antoine**
**Doornstraat 9**
**B-2780 Sint Gillis Waas(BE)**
Inventor: **Mestdagh, Denis Julien Gilles**
**Rue Schuermans 23**
**B-1090 Brussels(BE)**
Inventor: **Sierens, Christiaan Hendrik Jozef**
**Abelenlaan 17**
**B-2550 Kontich(BE)**

(74) Representative: **Vermeersch, Robert et al**
**BELL TELEPHONE MANUFACTURING**
**COMPANY Naamloze Vennootschap Patent**
**Department Francis Wellesplein 1**
**B-2018 Antwerpen(BE)**

(54) **Digital synchronizing arrangement using a tuned tapped delay line.**

(57) The synchronizing arrangement synchronizes a digital data signal (Din) applied to its data input terminal (Din) with a local clock (CKin) applied to its clock input (CKin). It includes a tuned tapped delay line (TDL) where the local clock (CKin) is delayed, a sampling circuit (DR2,..,DR4) where the digital data signal is sampled using a number of delayed clock signals, a first processing circuit (P) where the middle of a 0 1 0 pattern included in the signal is determined, a second processing circuit P2 where the variation in time of that middle is determined and an output circuit where based on the mentioned middle and variation, one of the delayed clock signals is selected to read the digital data signal.

The tuned tapped delay line includes a tapped delay line and a feedback circuit at two inputs of which the input of the tuned tapped delay line and its 90 degrees tap are applied. The output of the feedback circuit is connected to a control input of the tapped delay line.

FIG. I

The present invention relates to a digital synchronizing arrangement to recover synchronism of a digital data signal and a clock signal, said arrangement including delaying and sampling means which generate mutually delayed samples of said digital data signal, first processing means which process said samples and thereby generate consecutive first control signals each indicative of the phase difference of said clock signal and said digital data signal, and output means which from said digital data and in function of said first control signals generate a synchronized digital data signal.

Such an arrangement is already known in the art e.g. from the article "A B-ISDN Local Distribution System based on a Passive Optical Network" by J.W. Ballance et al, Globecom '90, San Diego. In this known arrangement the delaying and sampling means sample an expected bit pattern at the start of the digital data signal with the clock signal using a tapped delay line and a set of D-type registers. The processing means determine the centre of this specific bit pattern and generate a control signal indicative of this centre. The latter signal is then used by the output means to select the data sample corresponding with the mentioned centre.

As the above known synchronizing arrangement relies on a predetermined bit pattern included at the beginning of the digital data signal it is clear that when due to transmission errors this bit pattern is corrupted or lost recovery of synchronism is substantially impossible due to an erroneous control signal being generated.

An object of the invention is to provide a digital synchronizing arrangement of the above type, but which is substantially immune for the effects of temporary transmission errors on synchronization.

This object is achieved due to the fact that said arrangement further includes second processing means which are coupled to said first processing means and which subsequently to the occurrence of a predetermined number of first control signals and at each occurrence of a first control signal calculates a second control signal indicative of the variation in time of said first control signals and supplies said second control signal to said output means which prior to the occurence of said second control signals uses said first control signals to generate said synchronized data signal, and afterwards at each occurrence of a second control signal uses it to modify the control signal previously utilised to generate the synchronized data signal and uses the thus modified control signal to generate this synchronized data signal.

By taking into account the variation in time of the first control signal the control signal required by the mentioned output means for synchronization is predicted and used for synchronization. As a consequence, temporary loss or corruption of the first control signal due to transmission errors has no influence on the synchronization since the control signal for realisation thereof can always be predicted.

Since the bit pattern on which the known arrangement relies, is situated at the beginning of the data signal, synchronism can be lost in case of relatively long data signals.

Another object of the invention is to provide a synchronizing arrangement of the above type, which is also suited for long data signals.

This object is achieved due to the fact that said first processing means include :
- a processing circuit which determines the middle value of the rightmost and the leftmost of said samples with a logical one value ;
- a detection circuit with a first and second input at which said synchronized digital data signal and said digital data signal are applied respectively and an output at which an active signal is provided when said detection circuit detects a predetermined bit pattern included in said synchronized digital data signal;
- a latching circuit at an input of which said middle value is applied and at a clock input of which said active signal is fed, thus providing at an output thereof the middle value of said predetermined bit pattern, said output constituting the output of said first processing means and said middle value thus constituting said first control signal.

In this way a first control signal is generated whenever the predetermined bit pattern is detected in the data signal. Since this bit pattern may occur several times in a data signal, synchronization is repeated an according number of times and there is a relatively low possibility to lose synchronism in case of long data signals.

The present invention also relates to a tuned tapped delay line which is needed for the realization of the above synchronizing arrangement. This tuned tapped delay line is characterized in that it includes a tapped delay line with at least one control input and a feedback circuit having an output connected to said control input and a plurality of inputs, the input of said tapped delay line being connected to one of the inputs of the feedback circuit, while at least one intermediate output of said tapped delay line is connected to another input of said feedback circuit.

The above mentioned and other objects and features of the invention will become more apparent and the invention itself will be best understood by referring to the following description of an embodiment taken in conjunction with the accompanying drawings wherein:

Fig. 1 is a schematic representation of a digital synchronizing arrangement acording to the invention;

Fig. 2 shows the tuned tapped delay line TDL of Fig. 1 in more detail;

Fig. 3 represents the processing device P2 of Fig. 1 in more detail.

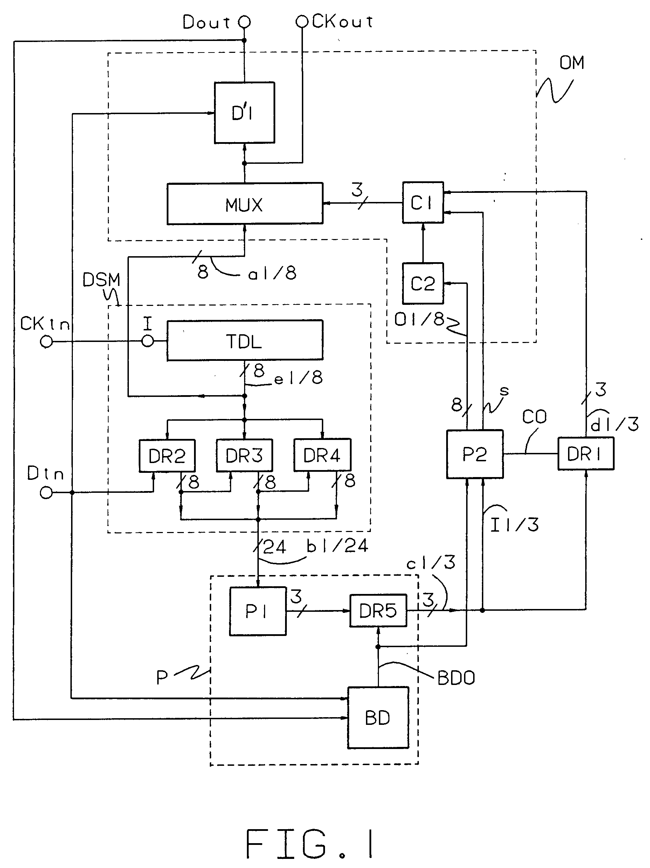

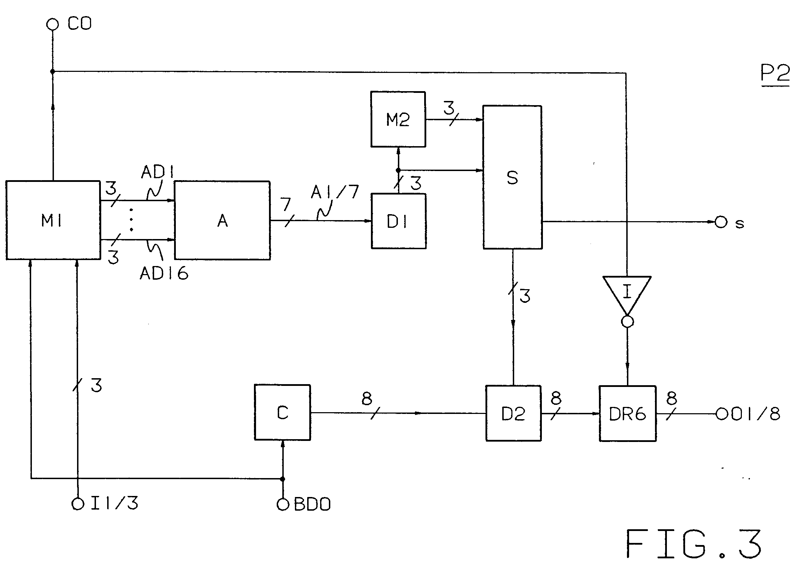

It has to be noted that the connections between the various circuits of Figs 1 and 3 are represented by single lines although some of them contain a number of wires. Each of the latter connections is indicated by a slash and by the number of lines comprised in this connection.

The schematically shown digital synchronizing arrangement of Fig, 1 is part of a passive optical network (not shown) including for instance a main station connected to a plurality of substations (not shown) and is more specifically included in each of these substations.

This arrangement is able to synchronize the phase of a local clock signal CKin in this substation with an incoming data signal Din received from the main station in such a way that each bit of this digital signal is sampled relatively close to the middle thereof. To perform this synchronizing operation, the arrangement uses a bit pattern comprising the 3 bits 0 1 0. Such a synchronizing pattern is inserted at the beginning of a frame of the signal but may obviously occur anywhere in the frame. The arrangement has 2 output terminals Dout and CKout, at which likenamed synchronized data and clock signals are respectively provided, and includes a delaying and sampling circuit DSM having two input terminals CKin and Din to which signals CKin and Din are applied respectively, 8 outputs a1/8 connected to 8 inputs of an output circuit OM and 24 further outputs b1/24 connected to 24 inputs of a processing device P including a processing circuit P1, a set DR5 of 3 D-type registers (not shown) and a bit pattern detection circuit BD. The latter device P has 3 outputs c1/3 coupled to a 3-bit input I 1/3 of another processing device P2 as well as to respective inputs of a set DR1 of 3 D-type registers (not shown).

Each register of the set DR5 has a data input to which the output of the processing circuit P1 is connected and an enable/disable input to which an output BDO of the bit pattern detection circuit BD is coupled, the output terminal Dout and the input terminal Din each being connected to an input of this detection circuit BD.

The input of the processing circuit P1 and the output of the set DR5 respectively constitute the input and output of the processing device P.

The processing device P2 further has a control input connected to the output BDO of the detection circuit BD, a control output C0 connected to the enable/disable inputs of the D-type registers of DR1, an 8-bit output 01/8 connected to an 8-bit input of the output circuit OM and a sign output s connected to an other input of the output circuit OM. A 3-bit output d1/3 of the set DR1 is connected to yet another input of this output circuit OM which has 2 output terminals CKout and Dout at which a like named synchronized clock and synchronized digital data signal are provided respectively.

The delaying and sampling circuit DSM includes a tuned tapped delay line TDL and 3 sets DR2, DR3, DR4 of 8 D-type registers each. TDL has an input I connected to the local clock terminal CKin and 8 outputs e1/8 which are connected to the clock inputs of respective ones of the 8 D-type registers of each of the sets DR2/4. The terminal Din is connected to a data input of each of the 8 D-type registers of the set DR2 and the 8 data outputs of the 8 D-type registers of the set DR2 are connected to respective data inputs of corresponding registers of the set DR3. In a similar way the 8 outputs of the 8 D-type registers of the set DR3 are connected to respective data inputs of corresponding registers of the set DR4. The 24 outputs of all registers DR2/4 constitute the above mentioned 24 outputs b1/24 of the delaying and sampling cicuit DSM.

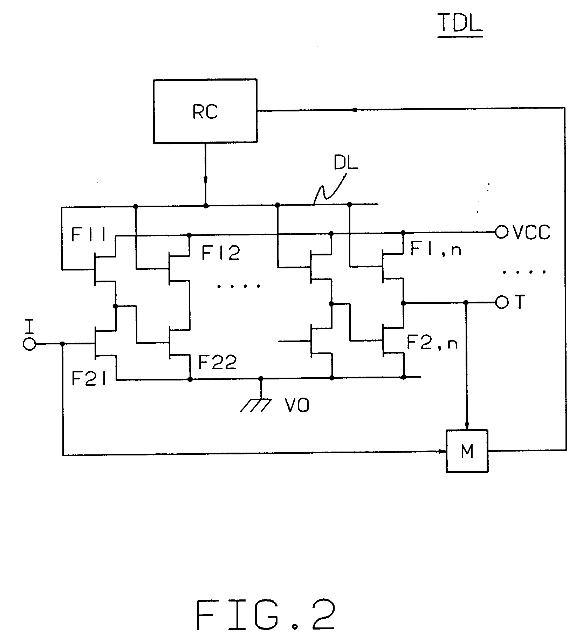

A first stage of the tuned tapped delay line TDL is schematically represented in Fig. 2. It comprises part of a well known delay line DL constituted by FETS F11/F1n, F21/F2n and having the above input I and an output tap T on which is provided an output clock signal T having a phase shift of 90 degrees with respect to the input clock signal CKin applied to the input I. The FETs of the delay line are connected in the following way. Groups of 2 FETs such as F11, F21; F12, F22, ..., F1,n, F2,n are connected in totem-pole and the joined common electrodes of the 2 FETs of one group are connected to the gate of the lower FET of the following group. The sources of the FETs F11/F1n are connected to a power terminal Vcc, whilst the drains of the FETs F21/F2n are connected to a ground terminal Vo. The input I is connected to the gate of FET F21 of the first group and the output clock signal T is provided at the joined electrodes of the FETS F1,n and F2,n of the last group. The input clock signal CKin and the output clock signal T are applied to a mixer M which at its output provides an error signal having an amplitude indicative of the phase shift between the clock signals CKin and T. This error signal controls a feedback circuit RC which includes a leveling circuit (not shown) and provides a control voltage signal for the gates of the FETs F11/F1n which constitute control inputs of the tuned tapped delay line TDL. The feedback circuit M, RC ensures that the phase shift of the output signal T is exactly equal to 90 degrees.

The tuned tapped delay line TDL comprises 3 more stages (not shown) which are similar to the first one described above. The input I of each following stage is connected to the tap T of a previous stage and the signal provided at the tap T of the last stage therefore provides a signal having a phase shift of 360 degrees with respect to the clock signal CKin. In order to obtain 8 output signals each stage is provided with an additional tap (not shown) on which a signal is generated having a phase shift of 45 degrees with respect to the signal applied at the input of the corresponding stage.

It has to be noted that the tuned tapped delay line TDL can be realised by means of other gating circuits such as bipolar transistors.

The main part of the first processing circuit P1 of Fig. 1 is well known in the art and is for example described in the article "A B-ISDN Local Distribution system based on a Passive Optical Network" by J.W. Ballance et al, Globecom '90, San Diego. This circuit periodically analyses the sequence of 24 data samples applied to its inputs and more particularly calculates the 5-bit sequence numbers of the leftmost and rightmost samples of value 1 of this sequence and afterwards determines the sequence number of the sample located nearest to the middle between these two samples. The last mentioned 5-bit sequence number are additionally translated into a 3-bit sequence number which is the modulo-8 value of the 5-bit sequence number and constitutes the sequence number of one of the 8 taps of the tuned tapped delay line TDL and is therefore called the tap sequence number.

It is clear that when the 24 samples are obtained from the bit pattern 010, the tap sequence number is that of the one of the 8 outputs of the tapped delay line TDL which is nearest to the middle of the 1 bit of this pattern and therefore to any bit of the incoming signal Din.

The bit pattern detector BD detects all bit patterns 0 1 0 included in the synchronized data signal Dout and the start of the incoming signal Din and provides at its output BDO a pulse which is activated only when such a bit pattern or the mentioned start is detected. Its structure is obvious to a person skilled in the art and is therefore not described.

The pulse provided at the output BDO is applied to the disable/enable inputs of the set DR5 and the signal provided at its outputs C1/3 is thus the tap sequence number of the tapped delay line TDL the nearest to the middle of the bit pattern.

The processing device P2 is represented in more detail in Fig. 3. A tap sequence number applied to its 3-bit input I 1/3 is stored in a first memory module M1, more specifically a FIFO (First-In-First-Out) register, whilst the signal applied to its control input connected to the output BDO of BD is fed to the clock input of the FIFO and to a control input of a time measurement device, more specifically a counter C. The FIFO has 16 memory locations and a control output CO which is activated when the FIFO is not full. The various stages of this FIFO register M1 are coupled to respective inputs AD1/16 of an adder circuit A whose 7-bit output A1/7 is connected to respective inputs of a first divider circuit D1 said circuits constituting a first calculation circuit. The latter divider circuit D1 has a 3-bit output connected to a second memory module M2 as well as to a first input of a substractor circuit S, the second input of which is coupled to a 3-bit output of M2. A 3-bit output of this substractor circuit S is connected to a first input of a second divider circuit D2, the 8-bit output of the counter circuit C being connected to a second input thereof. The 8-bit output of the divider circuit D2 is coupled to the outputs O 1/8 of the second processing device P2 via a set DR6 of 8 D-type registers (not shown), the output CO of the memory module M1 being connected to the enable/disable input of these registers via an inverter circuit I. M2, D2 and S constitute a second calculation circuit.

The substractor circuit S has the above mentioned sign output s on which a sign signal indicative of the sign of the result of the substraction operation is provided.

The output circuit OM of Fig. 1 includes a first counter C1 with a control input connected to the 3-bit output d1/3 of the set DR6, another control input connected to the sign output s of the processing device P2, a clock input connected to an output of a second counter C2 and an output connected to a selection input of a multiplexer circuit MUX. The second counter C2 has a control input connected to the 8-bit output O1/8 of the processing device P2 and the multiplexer MUX has an output connected to a clock input of a D-flipflop D'1. The data input of the flipflop D'1 is connected to the terminal Din. The output of the multiplexer MUX and the output of the D-flipflop D'1 constitute the respective output terminals CKout and Dout of the synchronizing arrangement.

The operation of the synchronizing arrangement is now described in detail by making reference to Figs. 1 and 3.

The local clock signal CKin applied to the terminal CKin is phase shifted by the tuned tapped delay line TDL which provides eight mutually shifted clock signals at its 8 taps a1/8, two consecutive taps providing signals having a phase shift of 45 degrees. The shifted clock signals have to be stable in time, and for this reason the tapped delay line has to be tunable. The 8 phase shifted clock signals are applied to the clock inputs of respective ones of the 8 D-type registers of each of the sets DR2 to DR4 as a consequence of which the set DR2 provides at its outputs 8 successive data samples of the digital data signal Din. By the next edge of the clock signal CKin each D-register of DR2 shifts the sample at its output to a corresponding register in set DR3, where the same happens with respect to DR4. It is clear that the 3 sets DR2 to DR4 in this way together provide 24 samples of 3 consecutive bits of the incoming digital data signal Din.

As explained earlier the processing circuit P1 then provides at its output the sequence number of a tap of the tuned tapped delay line TDL and applies it to the set DR5.

The latter set DR5 applies this 3-bit tap sequence number to the processing device P2 and to the set DR1 via its output c1/3 only when an activated signal from the detector circuit BD is applied to its control input, i.e. only when the 24 samples are obtained from the bit pattern 010 inserted at the beginning of the incoming data signal or from the same bit pattern occurring anywhere in the synchronized data signal.

In order to detect the latter pattern, the signal applied to the input of the circuit BD has to be synchronized. For this reason, this input is connected to the output terminal Dout of the arrangement. A first synchronization however relies on a bit pattern inserted at the beginning of the incoming signal Din, which means that for this first synchronization the start of the latter incoming signal is detected.

From the above it follows that each time the processing device P processes samples of the bit pattern 010, the set DR5 generates at its output c1/3 a 3-bit tap sequence number which is indicative of the phase difference between the clock signal CKin and the middle of the 1-bit of a bit pattern 0 1 0 of the digital data signal.

Each time a tap sequence number c1/3 is applied to its inputs 11/3 the processing device P2 (Fig. 3) memorizes it in a location of its FIFO queue M1 which produces an activated signal on its control output CO as long as the FIFO queue is not full, as already mentioned. Supposing that the FIFO is not full, this activated signal controls the D-type registers of the set DR1 via their enable/disable inputs in such a way that the tap sequence number applied to their inputs is applied to the input of the counter C1. As a consequence the counter value at the output of C1 is made equal to the value of the tap sequence number and from there this sequence number is applied to the selection input of the multiplexer MUX which accordingly connects the corresponding tap among a1/8 to the ouput CKout. As a consequence the delayed clock signal appearing at this output CKout is the one which is nearest to the middle of the bit pattern 010 and therefore also nearest to the middle of any bit of the digital signal Din, as already mentioned. For this reason CKout is used to read the data signal Din and to this end it controls the clock input of the data latch D'1 to which the data signal Din is applied. The synchronized data signal is thereby provided at the output bout of D'1.

Independently of the FIFO being full or not, all tap sequence numbers memorized in M1 in the way just described are added up in the adder A, and in the divider circuit D1 their sum is divided by the number of memorized values i.e. 16. In this way a so-called mean tap sequence number is obtained. By the substracting circuit S this mean value is substracted from a previously calculated mean value memorized in the memory module M2 and the calculated mean value is then used to overwrite the latter memorized value in M2.

The counter C is controlled by the control signal BDO in such a way that when this signal is activated due to a new tap sequence member being aplied to P2 the counter C applies its count value to the divider D2 and starts counting again. This means that the latter count value is indicative of the time interval elapsed between the moments at which two consecutive tap sequence numbers are applied to I1/3. In the divider D2 this time interval is divided by the difference value obtained by the last mentioned substraction.

It is clear that the result signal of the latter divider operation indicates the mean time interval during which a change of one position of the tap sequence number has occurred.

This result signal is not used when the FIFO is not full because it is then prevented from appearing at the output O1/8 of DR6 due to the control input thereof being de-activated (CO activated). In this case the selection input of MUX is controlled from DR1 and C1, as already explained. On the contrary, as soon as the FIFO is full, i.e. CO de-activated, the above result signal appears at the output O1/8 of DR6 and is used to control the multiplexer MUX. Indeed, the signal from the outputs O 1/8 of DR6 of P2 is applied to the counter C2 which is set to the time value of the last mentioned mean time interval. This counter C2 then starts counting down until it reaches the value zero and then applies a clock pulse to the clock input of the counter C1 which accordingly increases or decreases its current count value by one depending on the value of the sign signal applied to its control input s. The signal applied to the selector input of the multiplexer MUX then provokes a corresponding shift of the selected tap to the right or to the left.

It is clear that by taking into account the thus calculated drift in time of the value of the tap sequence number, synchronization is realized even when no bit pattern is temporarily transferred or when this bit pattern is corrupted. The counter C2 indeed restarts its count down from the latest time interval provided by the processing circuit P2 each time the value zero is reached, even if in the meanwhile no new time interval is received by P2 because no new first control signal is generated due e.g. to transmission errors.

It has to be noted that the calculated drift is adapted each time the mentioned bit pattern is received i.e. each time a new first control signal is generated.

A slightly different embodiment (not shown) of the synchronizing arrangement can be used in the main station to synchronize an incoming data signal with a system clock located therein. In this embodiment the digital data signal is delayed by the tuned tapped delay line and the outputs thereof are connected to the data inputs of the set DR2, whilst the clock CKin is applied to all clock inputs of the sets DR2 to DR4. The synchronized data signal Dout is then provided at the output of the multiplexer MUX and there is no need for the latch D'1. Such an arrangement is realized in the main station for each substation connected therewith.

An advantage of the above synchronizing arrangements is that they synchronize not only on a bit pattern introduced at the beginning of a data signal frame but also on the same bit pattern occurring anywhere in the data signal. In this way synchronization can be maintained even for long data signal frames.

While the principles of the invention have been described above in connection with specific apparatus, it is to be clearly understood that this description is made only by way of example and not as a limitation on the scope of the invention.

## Claims

1. Digital synchronizing arrangement to recover synchronism of a digital data signal (Din) and a clock signal (CKin), said arrangement including delaying and sampling means (DSM) which generate mutually delayed samples of said digital data signal, first processing means (P) which process said samples and thereby generate consecutive first control signals (c1/3) each indicative of the phase difference of said clock signal (CKin) and said digital data signal (Din), and output means (OM) which from said digital data (Din) and in function of said first control signals generate a synchronized digital data signal (Dout), characterized in that said arrangement further includes second processing means (P2) which are coupled to said first processing means (P) and which subsequently to the occurrence of a predetermined number of first control signals and at each occurrence of a first control signal calculates a second control signal indicative of the variation in time of said first control signals and supplies said second control signal to said output means (OM) which prior to the occurence of said second control signals uses said first control signals to generate said synchronized data signal, and afterwards at each occurrence of a second control signal uses it to modify the control signal previously utilised to generate the synchronized data signal and uses the thus modified control signal to generate this synchronized data signals.

2. Digital synchronizing arrangement according to claim 1 characterized in that said second processing means (P2) include

   - memory means (M1) to store said predetermined number of first control signals;
   - first calculation means (A, D1) to calculate at each occurrence of a first control signal the mean value of said stored first control signals;
   - time measurement means (C) to measure the time interval elapsing between the generation of each pair of consecutive first control signals; and
   - second calculation means (S, D2, M2) to calculate at each occurrence of a first control signal the variation in time of said first control signals by calculating the variation in time of said mean values from said mean value, a previously calculated mean value and said time interval and to provide said variation at an output of said second processing means (P2) via a latching system (DR6) at an enable/disable input of which an inverted enable/disable signal provided by said memory means (M1) is applied, said enable/disable signal being active previous to the occurance of a last one of said predetermined number of first control signals.

3. Digital synchronizing arrangement according to claim 2, characterized in that said first calculation means include an adder circuit (A) connected to said memory means (M1) to add up the values of said stored control signals, and having an output at which the result of said addition is provided, and a divider circuit (D1) connected to said adder circuit (A) to divide said result by said predetermined number, said divider circuit (D1) having an output at which said mean value is provided.

4. Digital synchronizing arrangement according to claim 2, characterized in that said time measurement means include a counter circuit (C) which is reset at the occurrence of each first control signal and stepped between the occurrences of two such consecutive control signals, thereby providing said time interval.

5. Digital synchronizing arrangement according to claim 4, characterized in that said second calculation means include :
   - second memory means (M2) coupled to said divider circuit (D1) to store said mean value;
   - substracting means (S) connected to said second memory means (M2) and to said divider circuit (D1), to calculate the difference between said stored mean value and a subsequently calculated mean value and to then overwrite the stored value with the calculated value; and
   - a second divider circuit (D2) connected to the output of said counter (C) and to an output of said substracting means (S) to divide said time interval by said difference, thus producing said variation in time of said mean value.

6. Digital synchronization arrangement according to claim 1, characterized in that said delaying and sampling means (DSM) include a tuned tapped delay line (TDL) and sampling means (DR2,.,DR4), said clock signal (CKin) being applied to an input (I) of said tuned tapped delay line (TDL) to provide at outputs (e1/8) thereof a plurality of mutually phase shifted clock signals which are applied to a clock input of said sampling means (DR2,.,DR4), said digital data signal (Din) being applied to a data input (Din) thereof.

7. Digital synchronization arrangement according to claim 1, characterized in that said delaying and sampling means include a tapped delay line and sampling means, said digital data signal being applied to an input of said tapped delay line to provide at outputs thereof a plurality of mutually shifted data signals which are applied to a data input of said sampling means, said clock signal being applied to a clock input thereof.

8. Digital synchronization arrangement according to claim 6, characterized in that said sampling means include n sets (DR2,.,DR4) of a plurality of D-type flipflops, the clock inputs of each flipflop of each set being connected to a corresponding output of said tuned tapped delay line (TDL) whilst said digital data signal (Din) is applied to the data inputs of the flipflops of a first one of said sets (DR2), each output of one of said sets being connected to a corresponding input of the flipflops of another one of said sets, but not of the first one, the outputs of said flipflops constituting the outputs of said sampling means.

9. Digital synchronization arrangement according to claim 7, characterized in that said sampling means include n sets of a plurality of D-type flipflops, said clock signal being applied to the clock inputs of all D-type flipflops, whilst the data inputs of each flipflop of each set is connected to a corresponding output of said tapped delay line, each output of one of said sets being connected to a corresponding input of the flipflops of another one of said sets, but not of the first one, the outputs of said flipflops constituting the outputs of said sampling means.

10. Digital sycnhronization arrangement according to claims 6 and 2, characterized in that said output means (OM) include
   - a first counter (C1) having a clock input and being initiated by said first control signal which is applied to a control input thereof via a latching circuit (DR1) at an enable/disable input of which said enable/disable signal provided by the first mentioned memory means (M1) is applied;
   - a second counter (C2) coupled to said second processing means (P2) and which provides a third control signal when reaching a predetermined count value, said count value being the value of said second control signal, said third control signal being applied to the clock input of said first counter (C1);
   - a multiplexer circuit (MUX) having a selector input connected to an output of said first counter (C1) and a plurality of inputs connected to the outputs of said tuned tapped delay line (TDL) said multiplexer circuit (MUX) having an output at which a phase delayed clock signal synchronized with said synchronized digital data signal is provided;
   - a gating circuit (D'1) with a data input at which said data signal (Din) is applied, a clock input at which said phase delayed clock signal provided by said multiplexer circuit (MUX) is applied and an output where said synchronized data signal (Dout) is provided.

11. Digital synchronization arrangement according to claims 7 and 2, characterized in that said output means (OM) include
- a first counter having a clock input and being initiated by said first control signal which is applied to a control input thereof via a latching circuit at an enable/disable input of which said enable/disable signal provided by the first mentioned memory means is applied;
- a second counter coupled to said second processing means and which provides a third control signal when reaching a predetermined count value, said count value being the value of said second control signal, said third control signal being applied to the clock input of said first counter;
- a multiplexer circuit having a selector input connected to an output of said first counter and a plurality of inputs connected to the outputs of said tapped delay line and an output where said synchronized data signal is provided.

12. Digital synchronization arrangement according to claim 1, characterized in that said first processing means (P) include :
- a processing circuit P1 which determines the middle value of the rightmost and the leftmost of said samples with a logical one value ;
- a detection circuit (BD) with a first and second input at which said synchronized digital data signal (Dout) and said digital data signal (Din) are applied respectively and an output at which an active signal is provided when said detection circuit (BD) detects a predetermined bit pattern included in said synchronized digital data signal (Dout);
- a latching circuit (DR5) at an input of which said middle value is applied and at a clock input of which said active signal is fed, thus providing at an output thereof the middle value of said predetermined bit pattern, said output constituting the output of said first processing means and said middle value thus constituting said first control signal.

13. Digital synchronization arrangement according to claim 6, characterized in that said tuned tapped delay line (TDL) includes a tapped delay line (DL) with at least one control input and a feedback circuit (RC, M) having an output connected to said control input and a plurality of inputs, the input of said tapped delay line (DL) being connected to one of the inputs of the feedback circuit (RC, M), while at least one intermediate output of said tapped delay line (DL) is connected to another input of said feedback circuit (RC, M).

14. Tuned tapped delay line characterized in that it includes a tapped delay line (DL) with at least one control input and a feedback circuit (RC, M) having an output connected to said control input and a plurality of inputs, the input of said tapped delay line (DL) being connected to one of the inputs of the feedback circuit (RC, M), while at least one intermediate output of said tapped delay line (DL) is connected to another input of said feedback circuit (RC, M).

FIG. 1

TDL

FIG.2

FIG.3

European Patent
Office

# EUROPEAN SEARCH REPORT

Application Number

EP 91 87 0102

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 419 896 (SIEMENS AG) * Column 2, line 25 - column 3, line 58; column 4, lines 15-44 * | 1,6 | H 04 L 7/033 |
| Y A | | 12 3-5,8, 10 | |
| X | GB-A-2 171 577 (BOLT BERANEK AND NEWMAN INC.) * Page 1, lines 106-125; page 2, lines 20-30,90-106 * | 1,7 | |
| A | | 9,10 | |
| Y | WO-A-9 104 619 (DATA BROADCASTING TECHNOLOGIES INC.) * Page 4, line 35 - page 5, line 28; page 7, line 18 - page 8, line 12 * | 12 | |
| A | EP-A-0 200 274 (PHILIPS PATENTVERWALTUNG GmbH) * Page 2, lines 26-30; page 3, line 27 - page 4, line 27; page 5, line 34 - page 6, line 7 * | 1-13 | TECHNICAL FIELDS SEARCHED (Int. Cl.5) H 04 L |

The present search report has been drawn up for all claims

| Place of search | Date of completion of the search | Examiner |
|---|---|---|
| THE HAGUE | 18-02-1992 | VAN DEN BERG,J.G.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04011)

European Patent
Office

EP 91 87 0102

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions,

namely:

See sheet -B-

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: 1-13

European Patent

Office

EP  91 87 0102  -B-

## LACK OF UNITY OF INVENTION

The Search Division considers that the present European patent application does not comply with the requirement of unity of
invention and relates to several inventions or groups of inventions,
namely:

1.  Claims  1-13  :  Synchronisation arrangement.

2.  Claim  14  :  Tapped delay line.